# EUROPEAN PATENT SPECIFICATION

(11) **EP 2 357 685 B1**
(45) Date of publication and mention of the grant of the patent: **19.09.2012**
(21) Application number: 10170406.2
(22) Date of filing: 22.07.2010
(51) Int. Cl.: H01M 2/04, H01M 2/08, H01M 2/12, H01M 2/34, H01M 10/42, H01M 6/50

(54) **Rechargeable battery**
Wiederaufladbare Batterie
Batterie rechargeable

(30) Priority: 15.01.2010 US 656085
(43) Date of publication of application: 17.08.2011
(73) Proprietor: SB LiMotive Co., Ltd., Yongin-si Gyeonggi-do (KR)
(72) Inventor: Byun, Sang-Won, Gyeonggi-do (KR); Kim, Yong-Sam, Gyeonggi-do (KR); Kim, Sung-Bae, Gyeonggi-do (KR); Kim, Hyo-Seob, Gyeonggi-do (KR); Lee, Chi-Young, Gyeonggi-do (KR)
(74) Representative: Gulde Hengelhaupt Ziebig & Schneider

(56) References cited:
- US-A- 5 800 937
- US-A- 6 143 440
- US-A1- 2004 126 650
- US-A1- 2006 257 729
- US-A1- 2008 070 067
- US-B1- 6 342 826

## Description

### Field

The described technology relates to a rechargeable battery. More particularly, it relates to a rechargeable battery having a safety device that can prevent explosion by solving an overcharging state.

### Description of the Related Art

Unlike a primary battery that cannot be recharged, a rechargeable battery can be repeatedly charged and discharged. Low-capacity rechargeable batteries are used for portable compact electronic apparatuses such as mobile phones, notebook computers, and camcorders, and high-capacity rechargeable batteries are widely used as a power source for driving a motor of a hybrid vehicle, etc.

Recently, a high-output rechargeable battery using a non-aqueous electrolyte having high energy density has been developed. The high-output rechargeable battery is configured with high capacity by connecting a plurality of unit rechargeable batteries in series so as to be used for driving a motor for an apparatus requiring a large amount of power, i.e., an electrical vehicle, etc.

In addition, one large-capacity rechargeable battery is formed of a plurality of rechargeable batteries coupled in series, and the rechargeable battery may be formed in a cylindrical or prismatic shape. The prismatic rechargeable battery includes an electrode assembly that has a positive electrode and a negative electrode with a separator interposed therebetween, a case having a space for incorporating the electrode assembly, a cap plate that seals the case and has a terminal hole into which an electrode terminal is inserted, and an electrode terminal that is electrically connected with the electrode assembly and is inserted into the terminal hole to protrude outside of the case.

When excessive heat is generated inside the rechargeable battery or internal pressure is increased due to dissolution of an electrolyte solution, the battery may exploded or combusted. Particularly, in the case of the prismatic battery, it is not easy to have a structure that cuts off or discharges current due to its specific characteristics of the terminal structure, compared to the cylindrical battery.

US 6,143,440 A discloses a protective housing for a rechargeable battery. US 6,342,826 B1 disclose a pressure and temperature responsive switch assembly for a rechargeable battery. US 2006/0257729 A1 discloses a secondary battery in which a short circuit is formed when the battery is deformed by a longitudinal pressure. US 5,800,937 A discloses a battery cell in a housing where one the terminals is decoupled from external contacts upon swelling of the cell inside the housing.

The above information disclosed in this Background section is only for enhancement of understanding of the background of the invention and therefore it may contain information that does not form the prior art that is already known in this country to a person of ordinary skill in the art.

### SUMMARY

An exemplary embodiment of the present invention has been made in an effort to provide a rechargeable battery having improved safety.

According to an exemplary embodiment of the present invention, a rechargeable battery is provided comprising an electrode assembly having a first electrode, a second electrode, and a separator interposed between the first and the second electrodes, a case, the inside of the case being provided for mounting the electrode assembly therein and for containing an electrolyte solution, and a cap assembly comprising a cap plate for closing an opening of the case, the cap plate containing an electrolyte injection opening. A short member is provided being adapted to be deformed to short-circuit the first electrode and the second electrode and is attached to the cap plate, the short member being in communication with the inside of the case containing the electrolyte to be deformed upon an increase of an internal pressure inside the case. Further, at least one fuse portion is provided being, electrically connected to the electrode assembly. The fuse portion is provided inside said case of the battery, and is provided between a first terminal of the battery and the electrode assembly, and/or is provided between a second terminal of the battery and the electrode assembly.

The at least one fuse portion is preferably adapted to electrically interrupt the connection to the electrode assembly after establishment of the short-circuit. Alternatively or additionally, the at least one fuse portion is adapted to melt after establishment of the short-circuit.

The at least one fuse portion may be series connected to the short member and the electrode assembly after establishment of the short-circuit. Alternatively or additionally, the at least one fuse portion is provided between the cap plate and the electrode assembly. The at least one fuse portion may be provided spaced apart from a terminal of the battery and spaced apart from the electrode assembly..

In one embodiment, a lead tab is provided to connect a terminal of the battery with the electrode assembly, wherein the lead tab integrally comprises the at least one fuse portion, or the at least one fuse portion is provided between the lead tab and the respective terminal.

The fuse portion preferably has a higher resistance than the respective lead tab. Alternatively or additionally, the fuse portion has a smaller cross section area than the respective lead tab. In one embodiment, the fuse portion has a higher resistance than other parts of the respective lead tab, i.e. than a terminal joining portion and/or an electrode assembly joining portion of the lead tab. The fuse portion may have a smaller cross section area than other parts of the respective lead tab, i.e. than a terminal joining portion and/or an electrode assembly joining portion of the lead tab. The fuse portion may have at least one opening.

The fuse portion is in one embodiment provided between a terminal joining portion and an electrode assembly joining portion of the respective lead tab.

The at least one fuse portion is preferably provided such that it is not in direct contact with an electrolyte solution provided inside the battery. Alternatively or additionally, the at least one fuse portion is located above the electrode assembly. The at least one fuse portion may comprise a material having a lower melting point than the respective lead tab. In another embodiment, the at least one fuse portion may comprise a material having a lower melting point than the respective terminal joining portion and/or an electrode assembly joining portion of the lead tab.

The short member comprises at least one of the following features: is made of conductive material; and is electrically connected to the second electrode via the cap plate.

The cap assembly preferably further comprises a first tab electrically connected to the first electrode, wherein the short member is adapted to be deformed such that it contacts the first tab and thereby the first electrode.

The cap assembly further comprises an insulating member such that the first tab is coupled to the cap plate with the insulating member interposed therebetween to electrically isolate the first tab from the cap plate.

The cap plate may further comprise a short hole covered by the short member.

The short member may comprise a curved or an arc or a convex shaped deformable region, curved toward and protruding into the interior of the battery.

A middle member may be disposed between the first tab and the short member. The middle member may comprise at least one of the following features: being attached to the short member; having a larger thickness than the short member; being formed of a cylindrical shape; being welded along its lower end circumference to the short member; and being arranged such that its upper surface is disposed in parallel to the first tab.

According to the exemplary embodiment of the present invention, a short-circuit is induced when internal pressure of the rechargeable battery is increased to prevent explosion or combustion of the battery, and electrical connection between a terminal and an electrode assembly can be interrupted by flow of an excessive amount of current.

### BRIEF DESCRIPTION OF THE DRAWINGS

FIG. 1 is a perspective view of a rechargeable battery according to a first exemplary embodiment of the present invention.
FIG. 2 is a cross-sectional view of FIG. 1, taken along the line II-II.
FIG. 3 is a perspective view of a negative lead tab according to the first exemplary embodiment of the present invention.
FIG. 4A is a graph showing voltage variation when a rechargeable battery having only a short member, and FIG. 4B is a graph showing voltage and temperature variation of the rechargeable battery according to the first exemplary embodiment of the present invention.
FIG. 5 is a cross-sectional view of a rechargeable battery according to a second exemplary embodiment of the present invention.
FIG. 6 is a cross-sectional view of a rechargeable battery according to a third exemplary embodiment of the present invention.
FIG. 7 is a cross-sectional view of a rechargeable battery according to a fourth exemplary embodiment of the present invention.
FIG. 8 is a cross-sectional view of a rechargeable battery according to a fifth exemplary embodiment of the present invention.
FIG. 9 is a cross-sectional view of a rechargeable battery according to sixth exemplary embodiment;
FIG. 10 is an enlarged perspective view of a lead tab in FIG. 9; and
FIG. 11 is a perspective view of a lead tab according to seventh exemplary embodiment.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention. In addition, like reference numerals designate like elements throughout the specification and the drawings.

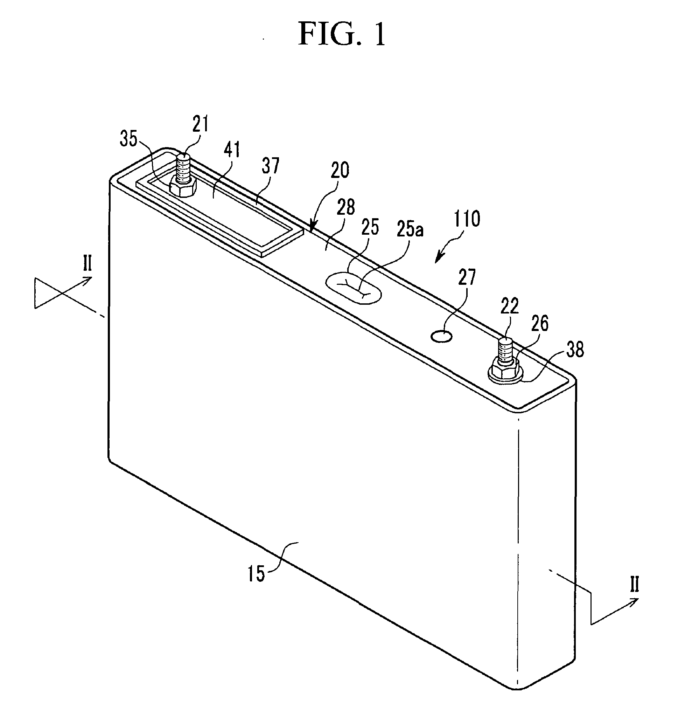

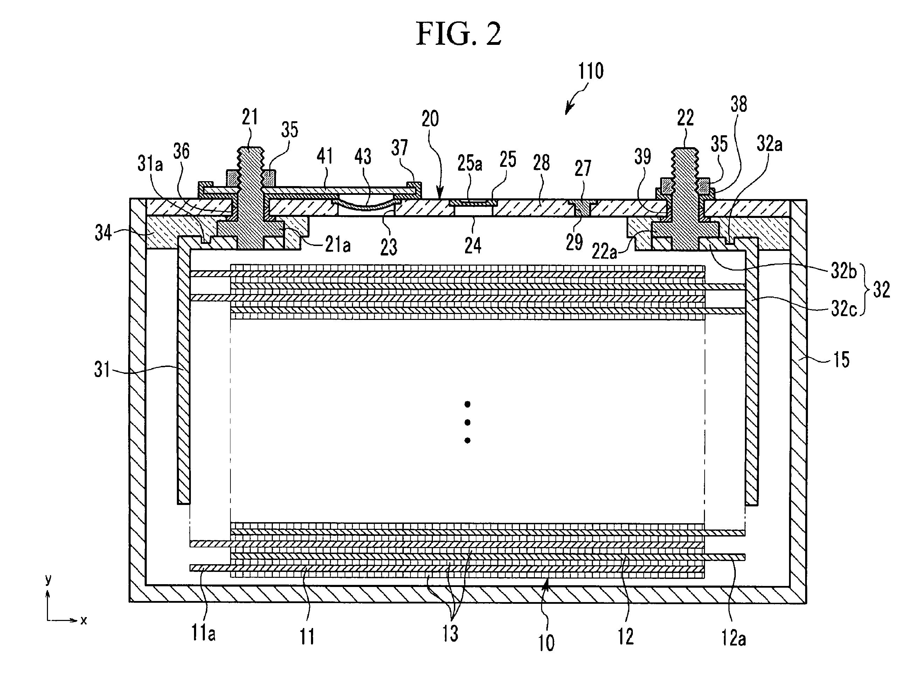

FIG. 1 is a perspective view of a rechargeable battery according to a first exemplary embodiment of the present invention, and FIG. 2 is a cross-sectional view of FIG. 1, taken along the line II-II.

Referring to FIG. 1 and FIG. 2, a rechargeable battery 110 according to the present exemplary embodiment includes an electrode assembly 10 where a separator 13 is disposed between a negative electrode 11 and a positive electrode 12 and the negative electrode 11 and the positive electrode 12 and the separator 13 are spirally wound, a case 15 in which the electrode assembly 10 is installed, and a cap assembly 20 combined to an opening of the case 15.

The rechargeable battery 110 according to the first exemplary embodiment is exemplarily described as a prismatic type of lithium ion secondary battery. However, the present invention is not limited thereto, and the present invention may be applied to various types of batteries such as a lithium polymer battery or a cylindrical battery.

The negative electrode 11 and the positive electrode 12 include coated regions and uncoated regions in a current collecting body that is formed of a thin plate metal foil. The coated regions are coated with an active material and the uncoated regions are not coated with the active material. The negative uncoated region 11 a is formed at one side end of the negative electrode 11 along a length direction thereof, and the positive uncoated region 12a is formed at the other side end of the positive electrode 12 along a length direction thereof. In addition, the negative electrode 11 and the positive electrode 12 interpose the separator 13 therebetween and then spirally wound.

However, the present invention is not limited thereto, and the electrode assembly 10 may have a structure in which positive and negative electrodes, respectively formed of a plurality of sheets, are stacked interposing a separator therebetween.

The case 15 is substantially formed as a cuboid, and an opening is formed one side thereof. The cap assembly 20 includes a cap plate 28 that covers the opening of the case 15, a first terminal 21 protruded outside of the cap plate 28 and electrically connected to the negative electrode 11, and a second terminal 22 electrically connected to the positive electrode 12.

The cap plate 28 is formed of a thin plate and combined to the opening of the case 15. In the cap plate 28, a sealing cap 27 formed in an electrolyte injection opening 29 and a vent plate 25 formed in a vent hole 24 and having a notch 25a so as to be opened at a predetermined pressure level.

The first terminal 21 and the second terminal 22 penetrate the cap plate 28, flanges 21 a and 22a that are supported under the cap plate 28 are formed in lower portions thereof, and external circumferential surfaces of upper poles protruded outside the cap plate 28 are threaded. In addition, nuts 35 that support the terminals 21 and 22 at upper portions thereof are fastened to the terminals 21 and 22.

Gaskets 36 and 39 are respectively installed between the first terminal 21 and the cap plate 28 and between the second terminal 22 and the cap plate 28 so as to seal gaps between the terminals 21 and 22 and the cap plate 28.

The first terminal 21 is electrically connected to the negative electrode 11 through a negative electrode lead tab 31, and the second terminal 22 is electrically connected to the positive electrode 12 through a positive electrode lead tab 32. The negative electrode lead tab 31 and the positive electrode lead tab 32 have fuse portions 31 a and 32a of which cross-sections are much less than other portions.

In the present exemplary embodiment, it is exemplarily described that the fuse portions 31 a and 32a are formed in both of the negative electrode lead tab 31 and the positive electrode lead tab 32, but the present invention is not limited thereto. Thus, the fuse portion may be formed one of the negative electrode lead tab 31 and the positive electrode lead tab 32. In addition, the first terminal may be connected to the positive electrode and the second terminal may be connected to the negative electrode.

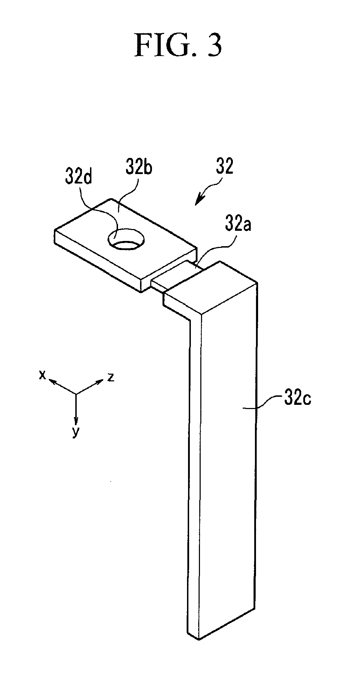

Referring to FIG. 3, the positive electrode lead tab and the negative electrode lead tab will be described in further detail. Since the negative electrode lead tab 31 and the positive electrode lead tab 32 have the same structure, the positive electrode lead tab 32 will be described instead of describing both.

The positive electrode lead tab 32 includes a terminal joining portion 32b, an electrode assembly joining portion 32c, and a fuse portion 32a. The terminal joining portion 32 includes a terminal hole 32d formed under the second terminal 22 and into which the second terminal 22 is inserted, the electrode assembly joining portion 32c is formed under the terminal joining portion 32b and welded to the positive uncoated region 11a, and the fuse portion 32a is disposed between the terminal joining portion 32b and the electrode assembly joining portion 32c and having a cross-section that is much smaller than other portions. Preferably, at least a cross section area of the fuse portion 32a in a first direction is smaller than the cross section area of the terminal joining portion 32b or the electrode assembly joining portion 32c in the same direction. Even more preferably, the cross section areas of the fuse portion in the all three spatial directions x, y, and z are smaller than the corresponding ones of the terminal joining portion 32b or the electrode assembly joining portion 32c. In a preferred embodiment, the at least one cross section area is smaller by at least 20%, even more preferable by at least 50%. In other words, at least one of the height, width and length of the fuse portion 32a is smaller with respect to the corresponding height, width and length of the terminal joining portion 32b and/or the horizontal part of the electrode assembly joining portion 32c. In yet other words, the fuse portion 32a has a higher electrically resistance or a lower melting point than the terminal joining portion 32b and/or the electrode assembly joining portion 32c.

The electrode assembly joining portion 32c is vertically bent after passing the fuse portion 32a.

Lower ends of the terminals 21 and 22 and upper ends of the lead tab 31 and 32 are inserted into a lower insulation member 38 disposed under the cap plate 38, and the lower insulation member 38 covers upper ends of the fuse portions 31 a and 32a. In this case, the fuse portions 31 a and 32a are placed higher than the electrode assembly 10.

As in the present exemplary embodiment, the fuse portions 31 a and 32a and electrolyte solution do not contact each other when the fuse portions 31 a and 32a are placed higher than the electrode assembly 10. Therefore, combustion of the electrolyte solution due to heat generated from the fuse portions 31 a and 32a can be safely prevented.

With such a structure, the negative electrode lead tab 31 electrically connects the first terminal 21 and the negative electrode 11 and the positive electrode lead tab 32 electrically connects the second terminal 22 and the positive electrode 12.

In the first terminal 21, a first short tab 41 electrically connected to the first terminal 21 is provided on the cap plate 28. An insulation member 37 that electrically insulates the first short tab 41 and the cap plate 28 is provided therebetween.

A connection plate 38 electrically connecting the second terminal 22 and the cap plate 28 is provided in the second terminal 22. The terminal 22 is inserted into the connection plate 38, and therefore the connection plate 38 is adhered to the cap plate 28 through the nut 35 provided thereon.

The cap assembly 20 includes a short member 43 that short-circuits the positive electrode 12 and the negative electrode 11, and when internal pressure of the rechargeable battery 110, the short member 43 is deformed and short-circuits the first short tab 41 and a second short tab.

The cap plate 28 electrically connected to the cap plate 28 functions as the second short tab.

A short hole 23 is formed in the cap plate 28, and the short member 43 is disposed between the insulation member 37 and the cap plate 28 in the short hole 23. The short member 43 may be formed of a curved portion that is convex downwardly in an arc shape and an inversion plate having edge portions fixed to the cap plate 28.

In this case, the fuse portions 31 a and 32a are coupled in series between the short member 43 and the positive electrode 12 or the negative electrode 11.

The first short tab 41 is extended to cover the short hole 23, and accordingly, when the short member 43 is deformed upwardly due to increase of internal pressure of the case 15, the first short tab 41 and the cap plate 28 are electrically connected through the short member 43, thereby causing a short-circuit.

When the short-circuit is induced, a large amount of current instantly flows so that the fuse portions 31 a and 32a formed in the negative lead tab 31 or the positive lead tab 32 are melt and a current is blocked between the terminals 21 and 22 and the electrode assembly 10.

As described, according to the present exemplary embodiment, a short-circuit is induced for instant flow of a large amount of current, and a current is blocked by melting the fuse portions 31 a and 32a by using the instantly generated current. When inducing short-circuit and operation of the fuse portions under a predetermined condition, operation of the rechargeable battery can be stopped before an undesirable situation occurs, and accordingly safety of the rechargeable battery can be improved.

When the fuse portions 31 a and 32a are not provided, the short member 43 may be melt due to the large amount of current generated after induction of the short-circuit, and accordingly the short-circuit state may not be maintained. When the short-circuit state is not maintained, the rechargeable battery of internal temperature and pressure are increased may repeat charging and discharging, thereby causing explosion or combustion.

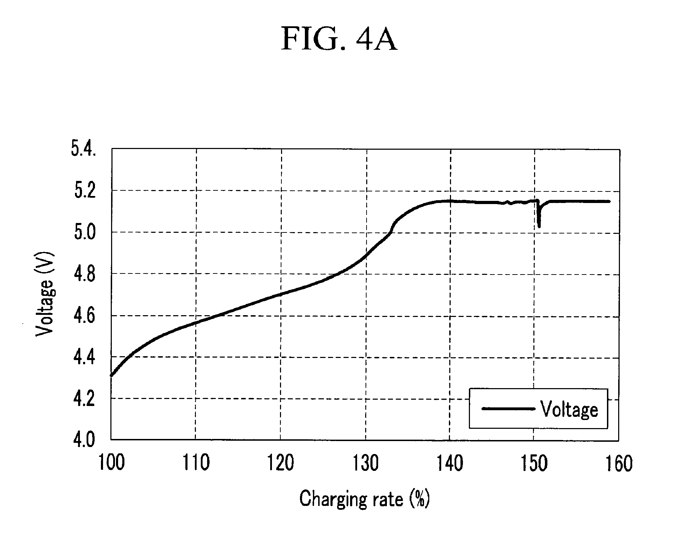

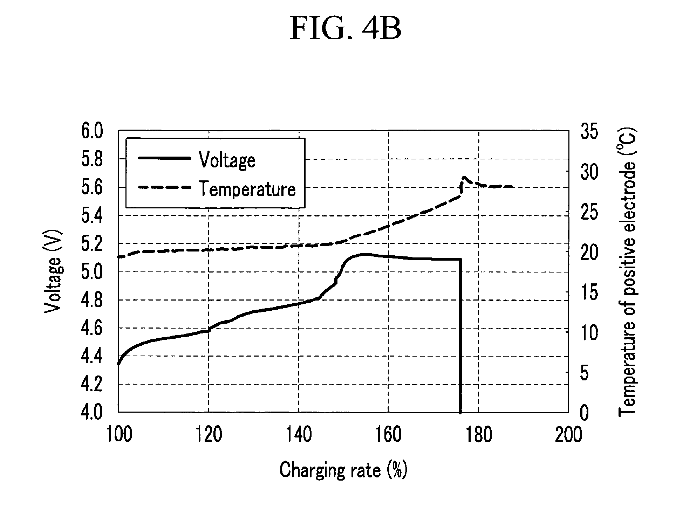

FIG. 4A is a graph showing voltage variation when a rechargeable battery having only a short member is overcharged, and FIG. 4B is a graph showing voltage and temperature variation of the rechargeable battery according to the first exemplary embodiment of the present invention.

FIG. 4A and FIG. 4B show voltage variation of an overcharged prismatic rechargeable battery having an output voltage of 4.0V. The short member of the rechargeable battery of FIG. 4A is set to be deformed when a charging rate of the battery is 150%, and in FIG. 4B, the short member of the rechargeable battery of FIG. 4B is set to be deformed when the charging rate of the battery is between 170 and 180.

In FIG. 4A, the short member is melt after the short-circuit is occurred and the voltage is increased again, but in FIG. 4B, the fuse portions are melt after the short-circuit is occurred so that the voltage is no more increased.

In addition, in the state of the art, when a welded portion is detached so that the current is blocked as like with the conventional art, an arc may be generated during the detaching of the welded portion, thereby causing combustion. However, when the fuse is melt by excessive current so that a current is blocked, generation of an arc can be prevented.

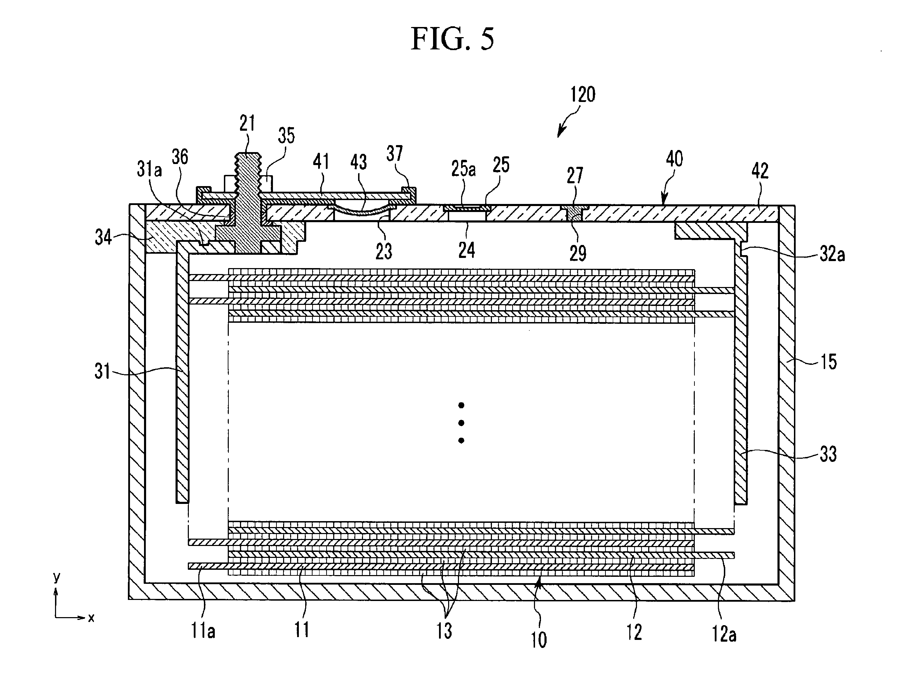

FIG. 5 is a cross-sectional view of a rechargeable battery according to a second exemplary embodiment of the present invention.

Referring to FIG. 5, a rechargeable battery 120 according to the second exemplary embodiment is the same as the rechargeable battery of the first exemplary embodiment, except that the second terminal is eliminated and the negative electrode lead tab is deformed in the second terminal, and therefore no further description for the same structure will be provided.

As shown in FIG. 5, the rechargeable battery 120 according to the present exemplary embodiment includes a case 15 and a cap assembly 40 sealing the case 15.

The cap assembly 40 includes a first terminal 21 protruded outside, a cap plate 42 combined to an opening of the case 15, and a first short tab 41 electrically connected to the first terminal 21 and provided on the cap plate 42.

The first terminal 21 penetrates the cap plate 28 and protrudes outside, and is electrically connected to a negative electrode through a negative electrode lead tab 31 having a fuse portion 31 a.

A short member 43 is inserted to a short hole 23 formed in the cap plate 58. The short member 43 is deformed when internal pressure of the case 15 is increased and induces a short-circuit of the cap plate 42 and the first short tab 41.

A positive electrode lead tab 33 that electrically connects a positive electrode 11 and the cap plate 42 is provided in the positive electrode 11. A lower end of the positive electrode lead tab 33 is welded to a positive electrode uncoated region 11 a and an upper end thereof is welded to the cap plate 42.

According to the present exemplary embodiment, the positive electrode lead tab 33 directly contacts the cap plate 42 and therefore contact resistance between the positive electrode 11 and the cap plate 42 can be minimized. In addition, a fuse portion 32a of which a cross-section is much smaller than other portion is formed in an upper portion of the positive electrode lead tab 33 and the fuse portion 32a is melt when a short-circuit is occurred due to deformation of the short member 43.

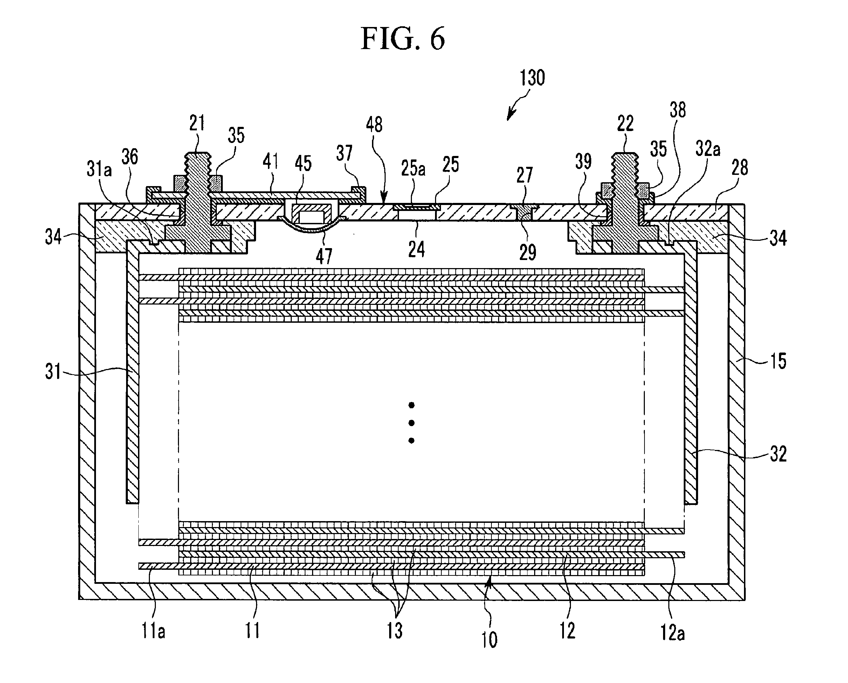

FIG. 6 is a cross-sectional view of a rechargeable battery according to a third exemplary embodiment of the present invention.

Referring to FIG. 6, a rechargeable battery 130 according to the present exemplary embodiment includes a middle member 45 disposed between a first short tab 41 and a short member 47.

The rechargeable battery 130 according to the present exemplary embodiment is the same as the rechargeable battery of the first exemplary embodiment, except that the middle member 45 is additionally provided in the rechargeable battery 130, and therefore no further description for the same structure will be provided.

The rechargeable battery 130 according to the present exemplary embodiment includes a case 15 and a cap assembly 48 sealing the case 15.

The cap assembly 48 according to the present exemplary embodiment includes a first terminal 21, a second terminal 22, a cap plate 28 combined to an opening of the case 15, and a first short tab 41 that is electrically connected to the first terminal 21 and provided on the cap plate 28.

The first terminal 21 is electrically connected to a negative electrode 11 through a negative electrode lead tab 31 having a fuse portion 31 a, and the second terminal 22 is electrically connected to a positive electrode 12 through a positive electrode lead tab 32 having a fuse portion 32a.

The cap plate 28 is electrically connected to the second terminal 22 through a connection plate 38.

A short member 47 is disposed on a bottom surface of the cap plate 28, and is formed of an inversion plate that is convexed downwardly so as to be deformed upwardly when internal pressure of the battery is increased.

A middle member 45 is disposed between a first short tab and a short member 47, and is substantially formed in a cylinder shape. When the middle member 45 is welded to the short member 47, the middle member 45 is welded to the short member 47 along the bottom circumference of the middle member 45 and therefore for sufficient deformation of the short member 47. In addition, an upper surface of the middle member 45 is disposed in parallel with the first short tab 41 in order to contact the first short tab 41 in a sufficient area.

The weight and shape of the middle member 45 are controlled for inverse deformation of the short member 47 under a predetermined pressure level.

Accordingly, when the short member 47 is deformed upwardly, the middle member 45 is lift and contacts the first short tab 41, and thus the cap plate 28 is electrically connected to the first short tab 41 through the short member 47 and the middle member 45.

When the short member 47 directly contacts the first short tab 41, the short member 47 is melt due to an over-current before the fuse is melt so that a short-circuit may be interrupted. This is because that the short member 47 partially contacts the first short tab 41 rather than sufficiently contacts the first short tab 41.

However, according to the present exemplary embodiment, the middle member 45 can contact the first short tab 41 in the sufficient area and the middle member 45 is welded to the short member 47, and therefore interruption of the short-circuit can be prevented until the fuse portions 31 a and 32a are melt.

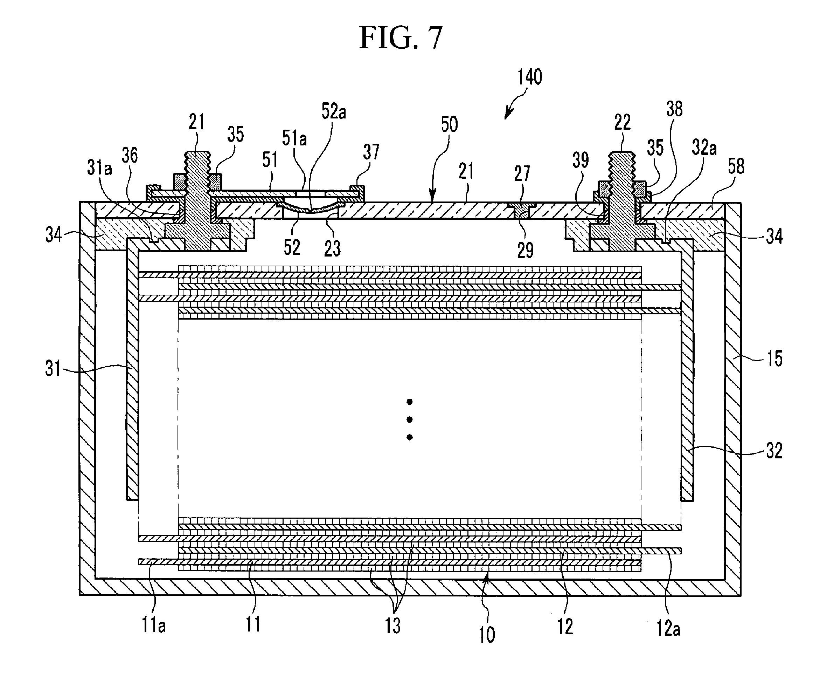

FIG. 7 is a cross-sectional view of a rechargeable battery according to a fourth exemplary embodiment of the present invention.

Referring to FIG. 7, a rechargeable battery 140 according to the fourth exemplary embodiment is the same as the rechargeable battery of the first exemplary embodiment, excluding a structure of a cap assembly 50, and therefore, no further description of the same structure will be provided.

The rechargeable battery 140 according to the present exemplary embodiment includes a case 15 and a cap assembly 50 sealing the case 15.

The cap assembly 50 according to the present exemplary embodiment includes a first terminal 21, a second terminal 22, a cap plate 58 combined to an opening of the case 15, and a first short tab 51 electrically connected to the first terminal 21 and provided on the cap plate 58.

The first terminal 21 is electrically connected to a negative electrode 11 through a negative electrode lead tab 31 having a fuse portion 31 a and the second terminal 22 is electrically connected to a positive electrode 12 through a positive electrode lead tab 32 having a fuse portion 32a.

The cap plate 58 is electrically connected to the second terminal 22 through a connection plate 58.

A vent hole 51 a is formed in the first short tab 51, and the vent hole 51 a is provided on an upper portion of a short hole 53 formed in the cap plate 58. In addition, a short member 52 that is deformed and induces a short-circuit of the first short tab 51 is inserted into the short hole 53. The short member 52 is formed of an inversion plate where a notch 52a is formed on a surface thereof.

When internal pressure of the case 15 is increased, the short member 52 contacts the first short tab 51 while being deformed upwardly and induces a short-circuit. When the short-circuit is occurred, an excessive amount of current flows and one of the fuse portions 31a and 32a is melt to prevent a current flow to the terminals 21 and 22. In addition, when the internal pressure of the case 15 is continuously increased after the fuse portions 31 a and 32a are operated, a notch 52a formed in the short member 52 is broken and internal gas of the case 15 is emitted through a vent hole.

As in the present exemplary embodiment, when the notch 52a is formed in the short member 52, an additional notch is not required and the internal gas can be easily emitted through a vent hole 41a of the first short tab 51.

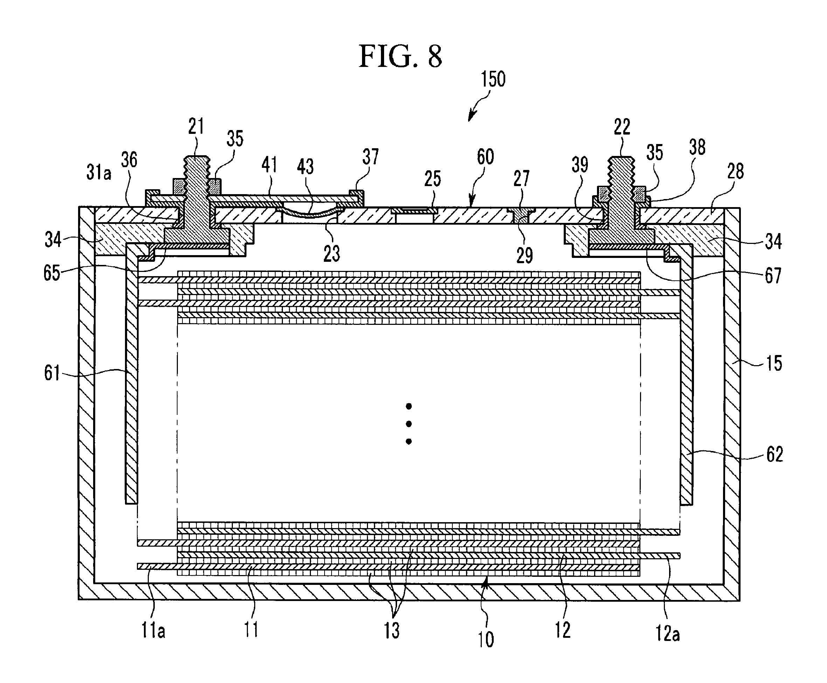

FIG. 8 is a cross-sectional view of a rechargeable battery according to a fifth exemplary embodiment of the present invention.

Referring to FIG. 8, a rechargeable battery 150 according to the fifth exemplary embodiment is the same as the rechargeable battery of the first exemplary embodiment, excluding a structure of a cap assembly 60, and therefore no further description for the same structure will be provided.

The rechargeable battery 150 according to the present exemplary embodiment includes a case 15 and a cap assembly 60 sealing the case 15.

The cap assembly 60 according to the present exemplary embodiment includes a first terminal 21, a second terminal 22, a cap plate 28 combined to an opening of the case 15, and a first short tab 41 electrically connected to the first terminal 21 and provided on the cap plate 28.

The cap plate 28 is electrically connected to the second terminal 22 through a connection plate 38.

A short hole 23 is formed under the first short tab 41, and a short member 52 that is deformed and induces a short-circuit of the cap plate 28 and the first short tab 41 is formed in the short hole 23. A short member 43 is formed of an inversion plate.

The first terminal 21 is electrically connected to a negative electrode 11 through a negative electrode lead tab 61 and the second terminal 22 is electrically connected to a positive electrode 12 through a positive electrode lead tab 62. In addition, a negative electrode fuse portion 65 formed of a material having a lower melting point than the negative electrode lead tab 61 is disposed between the first terminal 21 and the negative electrode lead tab 61, and a positive electrode fuse portion 67 formed of a material having a lower melting point than the positive electrode lead tab 62 is disposed between the second terminal and the negative electrode lead tab 61.

The negative electrode fuse portion 65 is fixed to the first terminal 21 and the negative electrode lead tab 61 by welding, and the positive electrode fuse portion 67 is fixed to the second terminal 22 and the positive electrode lead tab 62 by welding.

As described, in the present exemplary embodiment, the fuse portions 65 and 67 and the lead tabs 61 and 62 are respectively formed as separate members, and they may be made of different materials, respectively. Accordingly, the fuse portions 65 and 67 may be made of materials having a lower melting point compared to the lead tabs 61 and 62. That is, the lead tab 61 may be made of copper, the lead tab 62 may be made of aluminum, and the fuse portions 65 and 67 may be made of lead.

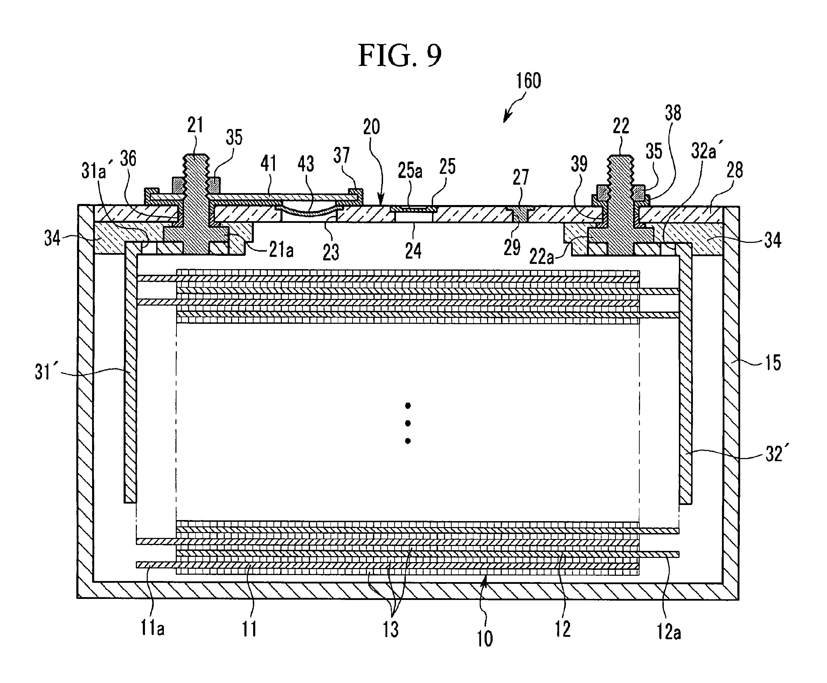

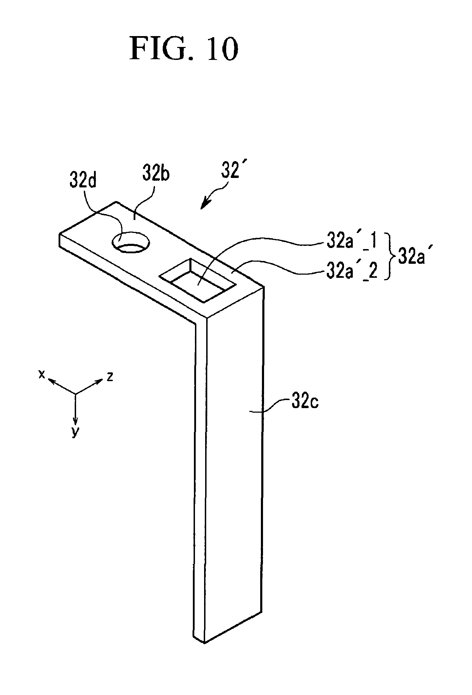

FIG. 9 illustrates a cross-sectional view of a rechargeable battery according to a sixth exemplary embodiment. FIG. 10 illustrates a perspective view of a lead tab in the sixth exemplary embodiment. Referring to FIGS. 9 and 10, a rechargeable battery 160 may be substantially the same as the rechargeable battery 110 described previously with reference to FIGS. 1-3, with the exception of the fuse structure in the lead tab. Only differences between the rechargeable battery 110 and the rechargeable battery 160 will be described hereinafter.

As illustrated in FIGS. 9 and 10, the rechargeable battery 160 may include first and second lead tabs 31' and 32' with first and second fuse portions 31 a' and 32a', respectively. Each of the first and second fuse portions 31 a' and/or 32a' may include at least one opening.

The first and second fuse portions 31 a' and 32a' may be formed in both of the first and second lead tabs 31' and 32', but exemplary embodiments are not limited thereto. For example, the first and second fuse portions may be formed in one of the first and second lead tabs 31' and 32'.

The second lead tab 32' may include the terminal joining portion 32b, the electrode assembly joining portion 32c, and the fuse portion 32a'. The terminal joining portion 32b may include the terminal hole 32d formed under the second terminal 22 and to which the second terminal 22 is inserted. The electrode assembly joining portion 32c may be formed under the terminal joining portion 32b, and may be welded to the positive uncoated region 12a. The first lead tab 31' may be substantially the same as the second lead tab 32'.

The fuse portion 32a' may be disposed between the terminal joining portion 32b and the electrode assembly joining portion 32c, and may have the at least one opening 32a'_1. For example, the fuse portion 32a' may include members 32a'_2 connecting, e.g., directly connecting, the terminal joining portion 32b and the electrode assembly joining portion 32c to each other, so the opening 32a'_1 may be between the members 32a'_2 along the z-axis and between the terminal joining portion 32b and the electrode assembly joining portion 32c along the x-axis.

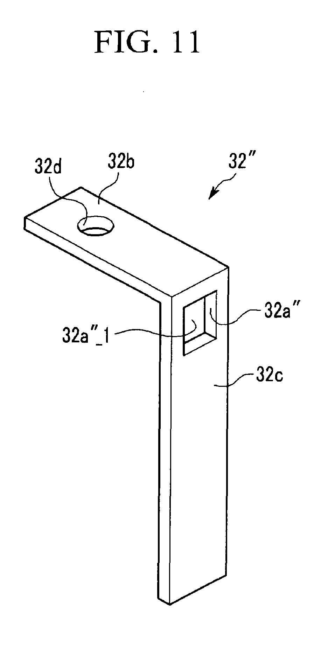

As illustrated in FIG. 10, the opening 32a'_1 may be in the xz-plane, i.e., coplanar with the terminal hole 32d, and the electrode assembly joining portion 32c may be vertically bent after passing the fuse portion 32a'. Alternatively, as illustrated in FIG. 11, a second lead tab 32" may include a fuse portion 32a" with an opening in a plane substantially perpendicular to that of the terminal hole 32d, i.e., in the zy-plane. Other features of the second lead tab 32" may be substantially the same as those of the second lead tab 32' described previously with reference to FIG. 10.

A rechargeable battery according to exemplary embodiments may include a cap plate with a short member configured to deform and electrically connect positive and negative electrodes, e.g., during overcharge of the battery, and a lead tab with at least one fuse electrically connected to one of the negative and positive electrodes of the battery. The battery may include various means for preventing overcharge, e.g., adjusting battery materials to control heat. However, when the battery overcharges, e.g., when pressure in the battery case exceeds a predetermined threshold, the short member may deform to electrically connect positive and negative electrodes, thereby triggering an external short circuit of the rechargeable battery. The short circuit causes a high current flow that melts the fuse in the lead tab. Melting or blowing of the fuse may stop or prevent overcharge of the battery and may increase safety of the battery.

While a number of exemplary embodiments of the present invention have been described, the present invention is not limited to these embodiments and may be modified in various ways without departing from the scope of the appended claims, the detailed description, and the accompanying drawings of the present invention. Therefore, such modifications are obviously within the scope of the present invention.

## Claims

1. A rechargeable battery (110, 120, 130, 140, 150) comprising:
an electrode assembly (10) having a first electrode (11), a second electrode (12), and a separator (13) interposed between the first and the second electrodes (12, 11);
a case (15), the inside of the case (15) is provided for mounting the electrode assembly (10) therein and for containing an electrolyte solution; and
a cap assembly (20, 40, 50, 60) comprising a cap plate (28, 42, 58) for closing an opening of the case (15), the cap plate (28, 42, 58) containing an electrolyte injection opening (29);
**characterized in that**
a short member (43, 47, 52) adapted to be deformed to short-circuit the first electrode (11) and the second electrode (12) and is attached to the cap plate (28, 42, 58), the short member (43, 47, 52) being in communication with the inside of the case (15) containing the electrolyte to be deformed upon an increase of an internal pressure inside the case (15); and
at least one fuse portion (31 a, 32a, 67):
is electrically connected to the electrode assembly (10),
is provided inside said case (15) of the battery (110, 120, 130, 140, 150), and
is provided between a first terminal (21) of the battery (110, 120, 130, 140, 150) and the electrode assembly (10), and/or is provided between a second terminal (21) of the battery (110, 120, 130, 140, 150) and the electrode assembly (10).

2. Rechargeable battery (110, 120, 130, 140, 150) according to claim 1, wherein the at least one fuse portion (31 a, 32a, 67):
is adapted to electrically interrupt the connection to the electrode assembly (10) after establishment of the short-circuit; and/or
is adapted to melt after establishment of the short-circuit.

3. Rechargeable battery (110, 120, 130, 140, 150) according to claim 1 or 2, wherein the at least one fuse portion (31 a, 32a, 67):
after establishment of the short-circuit, is series connected to the short member (43, 47, 52) and the electrode assembly (10); and/or
is provided between the cap plate (28, 42, 58) and the electrode assembly (10); and/or
is provided spaced apart from a terminal (21, 22) of the battery (110, 120,130, 140, 150) and spaced apart from the electrode assembly (10).

4. Rechargeable battery (110, 120, 130, 140, 150) according to any of the previous claims, wherein a lead tab (31, 32) is provided to connect a terminal (21, 22) of the battery (110, 120, 130, 140, 150) with the electrode assembly (10), wherein
the lead tab (31, 32) integrally comprises the at least one fuse portion (31 a, 32a); or
the at least one fuse portion (67) is provided between the lead tab (31, 32) and the respective terminal (21, 22).

5. Rechargeable battery (110, 120, 130, 140, 150) according to claim 4, wherein the fuse portion (31 a, 32a) has a higher resistance than the respective lead tab (31, 32), and/or has a smaller cross section area than the respective lead tab (31, 32), and/or has at least one opening.

6. Rechargeable battery (110, 120, 130, 140, 150) according to claim 4 or 5, wherein the fuse portion (31 a, 32a) is provided between a terminal joining portion (31 b, 32b) and an electrode assembly joining portion (31 c, 32c) of the respective lead tab (31, 32).

7. Rechargeable battery (110, 120, 130, 140, 150) according to any of the previous claims, wherein the at least one fuse portion (31 a, 32a) is provided such that it is not in direct contact with an electrolyte solution provided inside the battery (110, 120, 130, 140, 150), and/or is located above the electrode assembly (10).

8. Rechargeable battery (110, 120, 130, 140, 150) according to any of the previous claims 4 to 7, wherein the at least one fuse portion (31 a, 32a) comprises a material having a lower melting point than the respective lead tab (31, 32).

9. Rechargeable battery (110, 120, 130, 140, 150) according to any of the previous claims, wherein the short member (43, 47, 52):
is made of conductive material; and/or
is electrically connected to the second electrode (12) via the cap plate (28, 42, 58).

10. Rechargeable battery (110, 120, 130, 140, 150) according to any of the previous claims, wherein the cap assembly (20, 40, 50, 60) further comprises a first tab (41, 51) electrically connected to the first electrode (11), wherein the short member (43, 47, 52) is adapted to be deformed such that it contacts the first tab (41, 51) and thereby the first electrode (11).

11. Rechargeable battery (110, 120, 130, 140, 150) according to claim 10, wherein the cap assembly (20, 40, 50, 60) further comprises an insulating member (37) such that the first tab (41, 51) is coupled to the cap plate (28, 42, 58) with the insulating member (37) interposed therebetween to electrically isolate the first tab (41, 51) from the cap plate (28, 42, 58).

12. Rechargeable battery (110, 120, 130, 140, 150) according to any of the previous claims, wherein the cap plate (28, 42, 58) further comprises a short hole (23) covered by the short member (43, 47, 52).

13. Rechargeable battery (110, 120, 130, 140, 150) according to any of the previous claims, wherein the short member (43, 47, 52) comprises a curved or an arc or a convex shaped deformable region, curved toward and protruding into the interior of the battery (110, 120, 130, 140, 150).

14. Rechargeable battery (110, 120, 130, 140, 150) according to any of the previous claims, wherein a middle member (45) is disposed between the first tab (41) and the short member (47).

15. Rechargeable battery according to claim 14, wherein the middle member (45) comprises at least one of the following features:
being attached to the short member (47);
having a larger thickness than the short member (47);
being formed of a cylindrical shape;
being welded along its lower end circumference to the short member (47); and
being arranged such that its upper surface is disposed in parallel to the first tab (41).

## Patentansprüche

1. Wiederaufladbare Batterie (110, 120, 130, 140, 150), die folgende aufweist:
eine Elektrodenanordnung (10) mit einer ersten Elektrode (11), einer zweiten Elektrode (12) und einem Separator (13), der zwischen der ersten und der zweiten Elektrode (12, 11) eingeschoben ist;
ein Gehäuse (15), wobei das Innere des Gehäuses (15) für die Aufnahme der Elektrodenanordnung (10) sowie für eine Elektrolytlösung vorgesehen ist; und
eine Verschlusskappenanordnung (20, 40, 50, 60) mit einem Deckblech (28, 42, 58) zum Verschließen einer Öffnung des Gehäuses (15), wobei das Deckblech (28, 42, 58) eine Öffnung (29) zur Elektrolyteinspritzung aufweist;
**dadurch gekennzeichnet, dass**
ein kurzes Element (43, 47, 52), das verformt werden kann, um die erste Elektrode (11) und die zweite Elektrode (12) kurzzuschließen, an dem Deckblech (28, 42, 58) befestigt ist, wobei das kurze Element (43, 47, 52) mit dem Inneren des den Elektrolyten enthaltenden Gehäuses (15) in Verbindung steht und bei einer Erhöhung eines Innendruckes in dem Gehäuse (15) verformt wird; und
mindestens ein Sicherungsabschnitt (31 a, 32a, 67):
mit der Elektrodenanordnung (10) elektrisch verbunden ist,
in dem Gehäuse (15) der Batterie (110, 120, 130, 140, 150) vorhanden ist, und
zwischen einer ersten Anschlussklemme (21) der Batterie (110, 120, 130, 140, 150) und der Elektrodenanordnung (10) vorhanden ist, und/oder zwischen einer zweiten Anschlussklemme (21) der Batterie (110, 120, 130, 140, 150) und der Elektrodenanordnung (10) vorhanden ist.

2. Wiederaufladbare Batterie (110, 120, 130, 140, 150) nach Anspruch 1, wobei der mindestens eine Sicherungsabschnitt (31 a, 32a, 67):
dazu ausgebildet ist, die Verbindung mit dem Elektrodensystem (10) nach dem Aufbau des Kurzschlusses elektrisch zu unterbrechen; und/oder
dazu ausgebildet ist nach dem Bilden des Kurzschlusses zu schmelzen.

3. Wiederaufladbare Batterie (110, 120, 130, 140, 150) nach Anspruch 1 oder 2, wobei der mindestens eine Sicherungsabschnitt (31 a, 32a, 67):
nach dem Bilden des Kurzschlusses, mit dem kurzen Element (43, 47, 52) und der Elektrodenanordnung (10) in Reihe geschaltet ist; und/oder
zwischen dem Deckblech (28, 42, 58) und der Elektrodenanordnung (10) vorhanden ist; und/oder
zu einer Anschlussklemme (21, 22) der Batterie (110, 120, 130, 140, 150) beabstandet ist und zu der Elektrodenanordnung (10) beabstandet ist.

4. Wiederaufladbare Batterie (110, 120, 130, 140, 150) nach einem der vorhergehenden Ansprüche, wobei ein Zuleitungs-Tab (31, 32) vorhanden ist, um eine Anschlussklemme (21, 22) der Batterie (110, 120, 130, 140, 150) mit der Elektrodenanordnung (10) zu verbinden, wobei
der Zuleitungs-Tab (31, 32) den mindestens einen Sicherungsabschnitt (31 a, 32a) integral umfasst; oder
der mindestens eine Sicherungsabschnitt (67) zwischen dem Zuleitungs-Tab (31, 32) und der jeweiligen Anschlussklemme (21, 22) angeordnet ist.

5. Wiederaufladbare Batterie (110, 120, 130, 140, 150) nach Anspruch 4, wobei der Sicherungsabschnitt (31 a, 32a) einen höheren Widerstand aufweist als der jeweilige Zuleitungs-Tab (31, 32), und/oder einen kleineren Querschnitt besitzt als der jeweilige Zuleitungs-Tab (31, 32), und/oder mindestens eine Öffnung aufweist.

6. Wiederaufladbare Batterie (110, 120, 130, 140, 150) nach Anspruch 4 oder 5, wobei der Sicherungsabschnitt (31 a, 32a) zwischen einem Anschlussklemmen-Verbindungsabschnitt (31 b, 32b) und einem Verbindungsabschnitt der Elektrodenanordnung (31 c, 32c) des jeweiligen Zuleitungs-Tabs (31, 32) vorhanden ist.

7. Wiederaufladbare Batterie (110, 120, 130, 140, 150) nach einem der vorhergehenden Ansprüche, wobei der mindestens eine Sicherungsabschnitt (31 a, 32a) derart bereitgestellt ist, dass er sich nicht in direktem Kontakt mit einer Elektrolytlösung im Inneren der Batterie (110, 120, 130, 140, 150) befindet, und/oder über der Elektrodenanordnung (10) angeordnet ist.

8. Wiederaufladbare Batterie (110, 120, 130, 140, 150) nach einem der vorhergehenden Ansprüche 4 bis 7, wobei der mindestens eine Sicherungsabschnitt (31 a, 32a) aus einem Material besteht, das einen niedrigeren Schmelzpunkt besitzt als der jeweilige Zuleitungs-Tab (31, 32).

9. Wiederaufladbare Batterie (110, 120, 130, 140, 150) nach einem der vorhergehenden Ansprüche, wobei das kurze Element (43, 47, 52):
aus einem leitenden Material hergestellt ist; und/oder
über das Deckblech (28, 42, 58) mit der zweiten Elektrode (12) elektrisch verbunden ist.

10. Wiederaufladbare Batterie (110, 120, 130, 140, 150) nach einem der vorhergehenden Ansprüche, wobei die Verschlusskappenanordnung (20, 40, 50, 60) weiterhin einen ersten Tab (41, 51 ) besitzt, der mit der ersten Elektrode (11) elektrisch verbunden ist, wobei das kurze Element (43, 47, 52) verformt werden kann, so dass es mit dem ersten Tab (41, 51) und damit mit der ersten Elektrode (11) in Berührung kommt.

11. Wiederaufladbare Batterie (110, 120, 130, 140, 150) nach Anspruch 10, wobei die Verschlusskappenanordnung (20, 40, 50, 60) weiterhin ein Isolierelement (37) besitzt, so dass der erste Tab (41, 51) mit dem Deckblech (28, 42, 58) verbunden ist, wobei das Isolierelement (37) dazwischen eingeschoben ist, um den ersten Tab (41, 51) von dem Deckblech (28, 42, 58) elektrisch zu isolieren.

12. Wiederaufladbare Batterie (110, 120, 130, 140, 150) nach einem der vorhergehenden Ansprüche, wobei das Deckblech (28, 42, 58) weiterhin ein kurzes Loch (23) aufweist, das durch das kurze Element (43, 47, 52) abgedeckt ist.

13. Wiederaufladbare Batterie (110, 120, 130, 140, 150) nach einem der vorhergehenden Ansprüche, wobei das kurze Element (43, 47, 52) einen gekrümmten oder einen bogenförmigen oder konvexen, verformbaren Bereich aufweist, der zu dem Inneren der Batterie (110, 120, 130, 140, 150) hin gekrümmt ist und in das Batterieinnere hineinragt.

14. Wiederaufladbare Batterie (110, 120, 130, 140, 150) nach einem der vorhergehenden Ansprüche, wobei ein mittleres Element (45) zwischen dem ersten Tab (41) und dem kurzen Element (47) angeordnet ist.

15. Wiederaufladbare Batterie (110, 120, 130, 140, 150) nach Anspruch 14, wobei das mittlere Element (45) mindestens eines der folgenden Merkmale aufweist:
es an dem kurzen Element (47) befestigt ist;
es hat eine größere Dicke als das kurze Element (47);
es in zylindrischer Form ausgebildet ist;
es ist entlang seinem Umfang am unteren Ende mit dem kurzen
Element (47) verschweißt;
und
es ist derart angeordnet, dass seine Oberseite parallel zu dem ersten Tab (41) angeordnet ist.

## Revendications

1. Batterie rechargeable (110, 120, 130, 140, 150) comprenant :
un assemblage d'électrodes (10) comprenant une première électrode (11), une seconde électrode (12), et un séparateur (13) interposé entre les première et seconde électrodes (12, 11) ;
un boîtier (15), l'intérieur du boîtier (15) étant fourni pour le montage de l'assemblage d'électrodes (10) dans celui-ci ou pour contenir une solution électrolytique; et
un assemblage formant coiffe (20, 40, 50, 60) comprenant une plaque de coiffe (28, 42, 58) pour obturer hermétiquement un orifice du boîtier (15), la plaque de coiffe (28, 42, 58) contenant un orifice d'injection d'électrolyte (29) ;
**caractérisée en ce que** :
un élément court (43, 47, 52) est conçu pour être déformé pour court-circuiter la première électrode (11) et la seconde électrode (12) et est fixé à la plaque de coiffe (28, 42, 58), l'élément court (43, 47, 52) étant en communication avec l'intérieur du boîtier (15) contenant l'électrolyte pour sa déformation par une augmentation d'une pression interne à l'intérieur du boîtier (15) ; et
au moins une portion fusible (31 a, 32a, 67) :
est connectée électriquement à l'assemblage d'électrodes (10),
est fournie à l'intérieur dudit boîtier (15) de la batterie (110, 120, 130, 140, 150), et
est fournie entre une première borne (21) de la batterie (110, 120, 130, 140, 150) et l'assemblage d'électrodes (10), et/ou est fournie entre une seconde borne (21) de la batterie (110, 120, 130, 140, 150) et l'assemblage d'électrodes (10).

2. Batterie rechargeable (110, 120, 130, 140, 150) suivant la revendication 1, dans laquelle au moins une portion fusible (31 a, 32a, 67) :
est conçue pour interrompre électriquement la connexion à l'assemblage d'électrodes (10) après établissement du court-circuit ; et/ou est conçue pour fondre après établissement du court-circuit.

3. Batterie rechargeable (110, 120, 130, 140, 150) suivant la revendication 1 ou 2, dans laquelle ladite au moins une portion fusible (31 a, 32a, 67) :
après établissement du court-circuit, est connectée en série à l'élément court (43, 47, 52) et à l'assemblage d'électrodes (10) ; et/ou est fournie entre la plaque de coiffe (28, 42, 58) et l'assemblage d'électrodes (10) ; et/ou
est fournie à l'état espacé d'une borne (21, 22) de la batterie (110, 120, 130, 140, 150) et à l'état espacé de l'assemblage d'électrodes (10).

4. Batterie rechargeable (110, 120, 130, 140, 150) suivant l'une quelconque des revendications précédentes, dans laquelle une patte en plomb (31, 32) est fournie pour connecter une borne (21, 22) de la batterie (110, 120, 130, 140, 150) à l'assemblage d'électrodes (10), dans laquelle :
la patte en plomb (31, 32) comprend de manière intégrale ladite au moins une portion fusible (31 a, 32a) ; ou
ladite au moins une portion fusible (67) est fournie entre la patte en plomb (31, 32) et la borne respective (21, 22).

5. Batterie rechargeable (110, 120, 130, 140, 150) suivant la revendication 4, dans laquelle la portion fusible (31 a, 32a) a une résistance supérieure à celle de la patte en plomb respective (31, 32), et/ou a une surface en section transversale inférieure à celle de la patte en plomb respective (31, 32), et/ou comporte au moins un orifice.

6. Batterie rechargeable (110, 120, 130, 140, 150) suivant la revendication 4 ou 5, dans laquelle la portion fusible (31 a, 32a) est fournie entre une portion de jonction terminale (31 b, 32b) et une portion de jonction d'assemblage d'électrodes (31 c, 32c) de la patte en plomb respective (31,32).

7. Batterie rechargeable (110, 120, 130, 140, 150) suivant l'une quelconque des revendications précédentes, dans laquelle ladite au moins une portion fusible (31 a, 32a) est fournie de telle sorte qu'elle ne soit pas en contact direct avec une solution électrolytique fournie à l'intérieur de la batterie (110, 120, 130, 140, 150), et/ou est située au-dessus de l'assemblage d'électrodes (10).

8. Batterie rechargeable (110, 120, 130, 140, 150) suivant l'une quelconque des revendications 4 à 7 précédentes, dans laquelle ladite au moins une portion fusible (31 a, 32a) comprend une matière ayant un point de fusion inférieur à celui de la patte en plomb respective (31, 32).

9. Batterie rechargeable (110, 120, 130, 140, 150) suivant l'une quelconque des revendications précédentes, dans laquelle l'élément court (43, 47, 52) :
est constitué d'une matière conductrice ; et/ou
est connecté électriquement à la seconde électrode (12) par la plaque de coiffe (28, 42, 58).

10. Batterie rechargeable (110, 120, 130, 140, 150) suivant l'une quelconque des revendications précédentes, dans laquelle l'assemblage formant coiffe (20, 40, 50, 60) comprend en outre une première patte (41, 51) connectée électriquement à la première électrode (11), dans laquelle l'élément court (43, 47, 52) est conçu pour être déformé de telle sorte qu'il entre en contact avec la première patte (41, 51) et ainsi la première électrode (11).

11. Batterie rechargeable (110, 120, 130, 140, 150) suivant la revendication 10, dans laquelle l'assemblage formant coiffe (20, 40, 50, 60) comprend en outre un élément isolant (37) de telle sorte que la première patte (41, 51) soit couplée à la plaque de coiffe (28, 42, 58) avec l'élément isolant (37) interposé entre elles pour isoler électriquement la première patte (41, 51) de la plaque de coiffe (28, 42, 58).

12. Batterie rechargeable (110, 120, 130, 140, 150) suivant l'une quelconque des revendications précédentes, dans laquelle la plaque de coiffe (28, 42, 58) comprend en outre un trou court (23) couvert par l'élément court (43, 47, 52).

13. Batterie rechargeable (110, 120, 130, 140, 150) suivant l'une quelconque des revendications précédentes, dans laquelle l'élément court (43, 47, 52) comprend une région déformable incurvée ou en forme d'arc ou bien de forme convexe, incurvée vers et faisant saillie dans l'intérieur de la batterie (110, 120, 130, 140, 150).

14. Batterie rechargeable (110, 120, 130, 140, 150) suivant l'une quelconque des revendications précédentes, dans laquelle un élément intermédiaire (45) est disposé entre la première patte (41) et l'élément court (47).

15. Batterie rechargeable suivant la revendication 14, dans laquelle l'élément intermédiaire (45) comprend au moins l'une des caractéristiques suivantes :
être fixé à l'élément court (47) ;
avoir une épaisseur supérieure à celle de l'élément court (47) ;
être formé en un élément de forme cylindrique ;
être soudé le long de sa circonférence d'extrémité inférieure à l'élément court (47) ; et
être agencé de telle sorte que sa surface supérieure soit disposée parallèlement à la première patte (41).
